# EUROPEAN PATENT APPLICATION

(11) **EP 4 095 308 A1**
(43) Date of publication of application: **30.11.2022**
(21) Application number: 20946716.6
(22) Date of filing: 04.11.2020
(51) Int. Cl.: D06F 39/02, D06F 39/08

(54) **CONTROL METHOD AND APPARATUS FOR CLOTHING TREATMENT DEVICE, AND DEVICE AND STORAGE MEDIUM**

(30) Priority: 28.07.2020 CN 202010739720
(71) Applicant: Wuxi Little Swan Electric Co., Ltd., Wuxi, Jiangsu 214028 (CN)
(72) Inventor: HAN, Wanlei, Wuxi, Jiangsu 214028 (CN); ZHOU, Cunling, Wuxi, Jiangsu 214028 (CN); TIAN, Kai, Wuxi, Jiangsu 214028 (CN); YOU, Xiaomei, Wuxi, Jiangsu 214028 (CN)
(74) Representative: Whitlock, Holly Elizabeth Ann
(86) International application number: PCT/CN2020/126592
(87) International publication number: WO 2022/021653

(57) **Abstract**

Disclosed in the present application are a control method and apparatus for a clothing treatment device, and a device and a storage medium. The control method comprises: controlling a first water inlet of a clothing treatment device to feed water into a washing drum, the clothing treatment device not dispensing detergent during the water feeding process of the first water inlet; determining that the water feeding of the first water inlet has reached a set condition and controlling the clothing treatment device to dispense detergent into the washing drum. The embodiments of the present application can control the clothing treatment device to dispense detergent into the washing drum after the water feeding of the first water inlet has reached a set condition, effectively preventing the dispensed detergent from falling into the drainage structure; in addition, the inner drum is rotated during the process of dispensing detergent into the washing drum so that circular water flow is formed between the inner and outer drums, accelerating the rapid dissolution of the detergent to help ameliorate the problem of detergent not being fully dissolved.

## Description

### CROSS-REFERENCE TO RELATED APPLICATION

This application is based on and claims priority to Chinese patent application No. 202010739720.5, filed on July 28, 2020, the disclosure of which is hereby incorporated by reference in its entirety.

### TECHNICAL FIELD

The application relates to the field of laundry treatment, and in particular to a method and an apparatus for controlling a laundry treatment device, a device, and a storage medium.

### BACKGROUND

When a laundry treatment device washes laundry, a dispensed detergent can easily fall into a drainage structure, and the detergent in the drainage structure is not fully dissolved due to the small water flow effect in the drainage structure, so that the detergent is wasted, thereby affecting the washing effect. In addition, the detergent scattered in the drainage structure may also affect the rinsing effect of the laundry.

### SUMMARY

In view of this, embodiments of the application provide a method and an apparatus for controlling a laundry treatment device, a device, and a storage medium, to solve the problem that a detergent is difficult to be dissolved fully.

The technical solutions in the embodiments of the application are implemented as follows.

The embodiments of the application provide a method for controlling a laundry treatment device, which comprises the following operations.

A first water inlet of the laundry treatment device is controlled to feed water into a washing drum, where during water feeding through the first water inlet, the laundry treatment device does not dispense a detergent.

The laundry treatment device is controlled to dispense the detergent into the washing drum when determining that the water feeding through the first water inlet has reached a set condition.

In some embodiments, determining that the water feeding through the first water inlet has reached the set condition may comprise the following operation.

It is determined that a duration of the water feeding through the first water inlet has reached a set duration; or it is determined that an amount of the water feeding through the first water inlet has reached a set water feeding amount; or it is determined that a water level of the washing drum has reached a set water level.

In some embodiments, the operation that the laundry treatment device is controlled to dispense the detergent into the washing drum may comprise the following operation.

A second water inlet of the laundry treatment device is controlled to feed water into the washing drum, which simultaneously brings the detergent into the washing drum; or a detergent dispensing device of the laundry treatment device is controlled to dispense the detergent into the washing drum.

In some embodiments, when the second water inlet of the laundry treatment device feeds water into the washing drum, which simultaneously brings the detergent into the washing drum, or when the detergent dispensing device of the laundry treatment device dispenses the detergent into the washing drum, the method may further comprise the following operation.

An inner drum of the washing drum is controlled to rotate.

In some embodiments, the method may further comprise the following operation.

The laundry treatment device is controlled to perform washing when determining that a water level of the washing drum has reached a washing water level.

In some embodiments, the operation that the laundry treatment device is controlled to perform washing may comprise the following operation.

The laundry treatment device is controlled to work alternately in a first mode and a second mode. The first mode is configured for controlling a rotation speed of an inner drum of the washing drum to be smaller than a critical rotation speed at which the laundry is attached to an inner wall of the inner drum and rotates along with the inner drum, and the second mode is configured for controlling the rotation speed of the inner drum to be larger than or equal to the critical rotation speed.

In some embodiments, the operation that the laundry treatment device is controlled to perform washing further may comprise the following operation.

A heating device of the laundry treatment device is controlled to heat so that a water temperature in the washing drum is in a preset working temperature range.

The embodiments of the application further provide an apparatus for controlling a laundry treatment device, which comprises a control module.

The control module is configured to control a first water inlet of the laundry treatment device to feed water into a washing drum, where during water feeding through the first water inlet, the laundry treatment device does not dispense a detergent; and to control the laundry treatment device to dispense the detergent into the washing drum when determining that the water feeding through the first water inlet has reached a set condition.

The embodiments of the application further provide a laundry treatment device, which comprises: a processor, and a memory configured to store a computer program executable by the processor. The processor, when being configured to execute the computer program, implements steps of the method in the embodiments of the application.

The embodiments of the application further provide a storage medium storing a computer program thereon. The computer program, when being executed by a processor, implements steps of the method in the embodiments of the application.

According to the technical solutions provided by the embodiments of the application, the first water inlet of the laundry treatment device is controlled to feed water into the washing drum, during water feeding through the first water inlet, the laundry treatment device does not dispense the detergent; and the laundry treatment device is controlled to dispense the detergent into the washing drum when determining that the water feeding thorough the first water inlet has reached the set condition. Therefore, the laundry treatment device is controlled to dispense the detergent into the washing drum after the water feeding through the first water inlet has reached the set condition, thereby effectively avoiding the phenomenon that the dispensed detergent falls into the drainage structure. In addition, the inner drum is rotated in the process that the detergent is dispensed into the washing drum, and thus circular water flow is formed between the inner drum and an outer drum. In this way, rapid dissolution of the detergent is accelerated, and the problem that the detergent is not fully dissolved is improved. The dispensed detergent can be fully utilized, so that the clean-washing effect of the laundry is promoted, and meanwhile, the defect of unclean rinsing caused by the detergent not fully dissolved can be effectively avoided.

### BRIEF DESCRIPTION OF THE DRAWINGS

FIG. 1 illustrates a structural schematic diagram of a laundry treatment device according to an embodiment of the application.
FIG. 2 illustrates a flowchart schematic diagram of a method for controlling a laundry treatment device according to an embodiment of the application.
FIG. 3 illustrates a flowchart schematic diagram of a method for controlling a laundry treatment device according to an application embodiment of the application.
FIG. 4 illustrates a structural schematic diagram of an apparatus for controlling a laundry treatment device according to an embodiment of the application.
FIG. 5 illustrates another structural schematic diagram of a laundry treatment device according to an embodiment of the application.

### DETAILED DESCRIPTION

The application will be further described in detail below in combination with the accompanying drawings and embodiments.

Unless otherwise defined, all technical and scientific terms used in the specification have a same meaning as that generally understood by a person skilled in the art to which the application belongs. The terms used in the specification of the application are merely to describe the specific embodiments, rather than to limit the application.

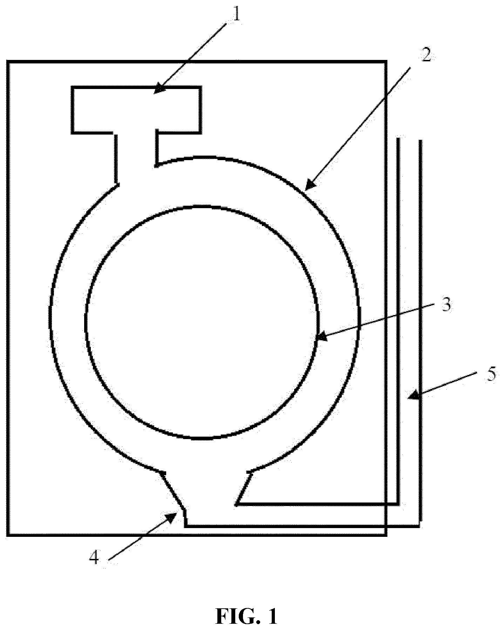

The embodiments of the application provide a control method of a laundry treatment device. The laundry treatment device may be various washing devices, such as an impeller type or drum type washing machine. As shown in FIG. 1, taking a drum type washing machine as an example, the laundry treatment device comprises: a detergent box 1, an outer drum 2 of a washing drum, an inner drum 3 of the washing drum, a drainage structure 4 and a drainage pipe 5. The detergent box 1 is configured for storing a detergent, such as washing powder or other washing elements in a powder state, a liquid state or a solid state. The detergent box 1 is provided with an inlet communicating with the outer drum 2, which can bring the detergent into the washing drum under the action of water flow. The drainage structure 4 is disposed at the bottom end of the outer drum 2 and drains water in the washing drum through the drainage pipe 5. In practical application, not-fully dissolved detergent is often present in the drainage structure 4, which affects the washing and rinsing processes.

In view of this, in various embodiments of the application, a first water inlet of the laundry treatment device is controlled to feed water into the washing drum, during feeding water through the first water inlet, the laundry treatment device does not dispense the detergent. The laundry treatment device is controlled to dispense the detergent into the washing drum when determining that the water feeding through the first water inlet has reached a set condition. As such, the laundry treatment device is controlled to dispense the detergent into the washing drum after water feeding through the first water inlet has reached the set condition, therefore the phenomenon that the dispensed detergent falls into the drainage structure can be effectively avoided. In addition, the inner drum is rotated in the process that the detergent is dispensed into the washing drum, and thus circular water flow can be formed between the inner drum and the outer drum, so that rapid dissolution of the detergent is accelerated, and the problem that the detergent is not fully dissolved is improved. The dispensed detergent can be fully utilized, so that the clean-washing effect of laundry can be promoted, and the defect of unclean rinsing caused by the detergent not fully dissolved can be effectively avoided.

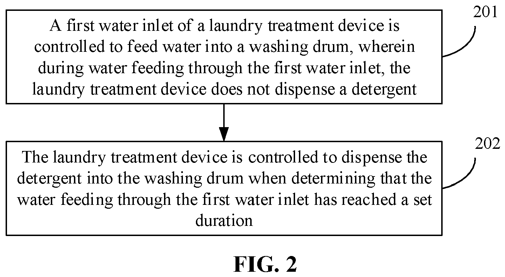

As shown in FIG. 2, the method for controlling the laundry treatment device provided by the embodiments of the application comprises the following operations.

In S201, a first water inlet of the laundry treatment device is controlled to feed water into the washing drum, where during water feeding through the first water inlet, the laundry treatment device does not dispense a detergent.

In S202, the laundry treatment device is controlled to dispense the detergent into the washing drum when determining that the water feeding through the first water inlet has reached a set condition.

Herein, the first water inlet refers to a water inlet that does not communicate with the detergent box for storing the detergent. The first water inlet herein may be a water inlet for a pre-washing position or a water inlet for a spraying opening, as long as water can be fed exclusively, that is, when the laundry treatment device feeds water through the first water inlet, the detergent cannot be brought into the washing drum, and the detergent will also not be dispensed anywhere else in the laundry treatment device.

In some embodiments, determining that the water feeding through the first water inlet has reached the set condition comprises the following operation.

It is determined that a duration of the water feeding through the first water inlet has reached a set duration; or it is determined that an amount of the water feeding through the first water inlet has reached a set water feeding amount; or it is determined that a water level of the washing drum has reached a set water level.

Herein, whether the water feeding has reached the set condition or not can be determined based on at least one of the duration of the water feeding through the first water inlet, the amount of the water feeding through the first water inlet and the water level of the washing drum. For example, after a water inlet valve corresponding to the first water inlet is controlled to be opened, the water feeding duration can be counted based on a timer, and if the water feeding duration reaches a set duration, it is determined that the water feeding through the first water inlet has reached the set condition. Or, after a water inlet valve corresponding to the first water inlet is controlled to be opened, the amount of the water feeding through water feeding is counted based on a flow monitoring device, and if the water feeding amount reaches a set water feeding amount, it is determined that the water feeding through the first water inlet has reached the set condition. Or, the water level in the washing drum is detected based on a liquid level detection device in the washing drum, and if the water level in the washing drum reaches the set water level, for example, the water level reaches the lowest horizontal position of the inner drum, it is determined that the water feeding through the first water inlet reaches the set condition. In some embodiments, two or more of the above set conditions can be combined, so that even if the timer, the flow monitoring device or the liquid level detection device fails, whether water feeding through the first water inlet reaches the set condition or not can be judged based on the other judgment factors. Therefore, it can be ensured that the dispending time of the detergent meets the requirements of the embodiment of the application, so that the water level in the washing drum exceeds the drainage structure, and the defect that the detergent is not fully dissolved due to the fact that the dispensed detergent falls into the drainage structure can be effectively avoided.

In some embodiments, the operation that the laundry treatment device is controlled to dispense the detergent into the washing drum comprises the following operation.

A second water inlet of the laundry treatment device is controlled to feed water into the washing drum, which simultaneously brings the detergent into the washing drum; or a detergent dispensing device of the laundry treatment device is controlled to dispense the detergent into the washing drum.

Herein, the second water inlet refers to a water inlet communicating with the detergent box, that is, when water is fed through the second water inlet, flowing water can bring the detergent in the detergent box into the washing drum.

The detergent in the laundry treatment device can be brought into the washing drum by the water feeding through the second water inlet. In addition, in some embodiments, the laundry treatment device may be provided with an automatic detergent dispensing device, so that automatic dispensing of the detergent is realized, i.e., the detergent does not need to be brought into the washing drum by flowing water, and may be dispensed into the washing drum by a dispensing mechanism such as a spray pump. When the detergent is dispensed into the washing drum through the automatic detergent dispensing device, the laundry treatment device can control the automatic detergent dispensing device to execute the operation after the water feeding through the first water inlet reaches the set condition.

It can be understood that when the detergent is dispensed into the washing drum by the laundry treatment device, water can be fed through the first water inlet at the same time. For example, when the laundry treatment device dispenses the detergent by the water feeding through the second water inlet, water can be fed through the first water inlet at the same time, namely, water can be fed into the washing drum through the first water inlet and the second water inlet together until the washing water level is reached. Therefore, the water feeding duration can be shortened, and the washing efficiency is improved. When the laundry treatment device dispenses the detergent through the detergent dispensing device, water can be also fed through the first water inlet until the washing water level is reached.

In some embodiments, when the second water inlet of the laundry treatment device feeds water into the washing drum, which simultaneously brings the detergent into the washing drum or the detergent dispensing device of the laundry treatment device dispenses the detergent into the washing drum, the following operation further comprises, that is, controlling the inner drum of the washing drum to rotate. Therefore, when the detergent enters the washing drum along with the water flow of the second water inlet, the detergent firstly enters between the inner drum and the outer drum of the washing drum along with the water flow, and circular water flow between the inner drum and the outer drum is formed under the action of rotation of the inner drum. The circular water flow can accelerate dissolution of the detergent. Exemplarily, the rotation speed of the inner drum may be 60 rpm (revolutions per minute) or above. The inner drum may rotate in one direction to accelerate the dissolution of the detergent. Preferably, the inner drum may rotate alternately in both forward and reverse directions, with the circular water flow having more pronounced effect on accelerated dissolution of the detergent.

In some embodiments, the method further comprises the following operation.

The laundry treatment device is controlled to perform washing when determining that a water level of the washing drum has reached a washing water level.

The laundry treatment device can be controlled to wash laundry in the washing drum when determining that the water level of the washing drum has reached the washing water level.

In some embodiments, the operation that the laundry treatment device is controlled to perform washing comprises the following operation.

The laundry treatment device is controlled to work alternately in a first mode and a second mode. The first mode is configured for controlling a rotation speed of an inner drum of the washing drum to be smaller than a critical rotation speed at which the laundry is attached to an inner wall of the inner drum and rotates along with the inner drum, and the second mode is configured for controlling the rotation speed of the inner drum to be larger than or equal to the critical rotation speed.

Herein, the first mode is also referred to as a beating washing mode, in such a case, the rotation speed of the inner drum is smaller than the critical rotation speed at which the laundry is attached to the inner wall of the inner drum and rotates along with the inner drum, and the laundry is lifted from the drum bottom under the action of lifting ribs of the inner drum and falls from a high position under the action of gravity to realize beating washing. The second mode is also referred to as a high-speed rotary washing mode, in such a case, the laundry can rotate along with the inner wall of the inner drum under the action of centrifugal force due to the fact that the rotation speed of the inner drum is larger than or equal to the critical rotation speed. By alternating operation of the first mode and the second mode, the detergent can be fully dissolved in the washing process, which is conducive to making full use of the detergent to wash the laundry and subsequent rinsing of the laundry. It is to be noted that the alternating operation of the first mode and the second mode may be that the first mode is operated first and then the second mode is operated, which is cycled until the washing is finished, or that the second mode is operated first and then the first mode is operated, which is cycled until the washing is finished. The operating durations of the first mode and the second mode in a cycle period can be equal or different, the operating durations corresponding to the cycle periods can be equal or different, which are not specifically limited in the embodiments of the application.

In some embodiments, the operation that the laundry treatment device is controlled to perform washing further comprises the following operation.

A heating device of the laundry treatment device is controlled to heat so that a water temperature in the washing drum is in a preset working temperature range.

Herein, a heating device for heating water in the washing drum can be provided in the laundry treatment device. The heating device is controlled to heat based on the detected water temperature, so that the water temperature in the washing drum is in a proper working temperature range, which is beneficial to accelerate the dissolution of the undissolved detergent in the washing process, and to promote the clean-washing effect of the laundry. For example, water temperature in the washing drum is detected, and if the water temperature is higher than an upper limit value of the working temperature range, heating of the heating device is stopped, and if the water temperature is lower than a lower limit value of the working temperature range, the heating device is started for heating.

The application will be further described in detail below with reference to an application embodiment.

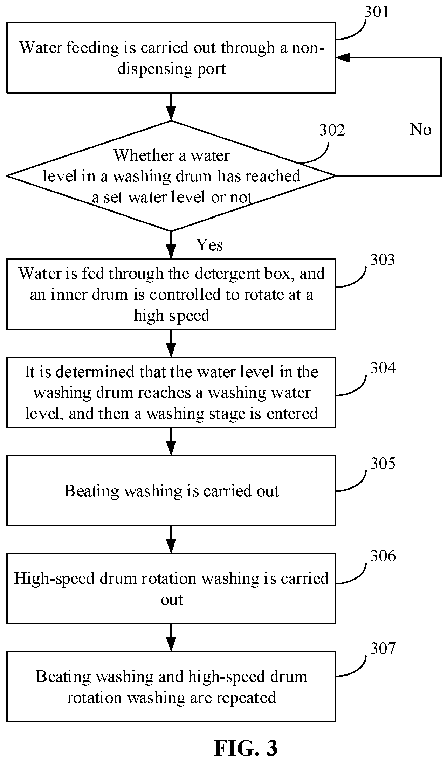

As shown in FIG. 3, a method for controlling a laundry treatment device provided by the application embodiment comprises the following operations.

In S301, water feeding is carried out through a non-dispensing port.

Herein, based on a washing starting instruction, the laundry treatment device controls the non-dispensing port, namely, the abovementioned first water inlet, to feed water, and the laundry treatment device can control a water inlet valve which does not communicate with a detergent box to be opened, so that water feeding into the washing drum is realized, and a detergent would not be brought into the washing drum in water feeding process. For example, water can be fed through a per-washing water inlet or a spraying water inlet.

In S302, it is determined whether the water level in the washing drum has reached a set water level or not, if yes, S303 is executed, if no, the process returns to S301.

Herein, the laundry treatment device can directly judge whether the water level reaches the set water level or not based on the detected water level in the washing drum, and also can indirectly judge whether the water level reaches the set water level or not based on the water feeding duration after the water inlet valve corresponding to the first water inlet is opened. For example, set duration can be determined based on statistics, and it is determined that the water level in the washing drum has reached the set water level when determining that water feeding duration reaches the set duration. The set water level herein is mainly configured for ensuring that the drainage device can be submerged by water and the detergent does not fall into the drainage device.

In S303, water is fed through the detergent box, and an inner drum is controlled to rotate at a high speed.

Herein, the laundry treatment device controls a water inlet valve corresponding to the detergent box to be opened, so that the detergent enters the washing drum under the action of water flow. Meanwhile, the laundry treatment device controls the inner drum to rotate at a high speed, and water flow mixed with the detergent enters between the inner drum and an outer drum of the washing drum. Circular water flow is formed between the inner drum and the outer drum due to the high-speed rotation of the inner drum, and thus the detergent can be rapidly dissolved. The rotation speed of the inner drum is generally 60 rpm or above. The water amount fed in the water feeding duration herein and in the water feeding duration in S301 is smaller than or equal to estimated water amount corresponding to the washing water level. In such a case, most of the detergent has been dissolved.

In S304, it is determined that the water level in the washing drum reaches a washing water level, and then the washing stage is entered.

The laundry treatment device judges whether the water level in the washing drum reaches the washing water level not, if yes, the washing stage is entered, if no, water can be fed through the non-dispensing port and/or the detergent box until the washing water level is reached. In practical application, the washing water level herein may be determined based on the detected load amount of the laundry before controlling water feeding through the non-dispensing port. For example, based on fuzzy weighing, the weight of the laundry to be washed is determined, and the washing water level is selected based on the weight of the laundry.

In S305, beating washing is carried out.

Herein, the laundry treatment device works in the abovementioned first mode. Under the first mode, the laundry treatment device can also selectively heat, so that the water temperature in the washing drum is in a preset working temperature range.

In S306, high-speed drum rotation washing is carried out.

Herein, the laundry treatment device works in the abovementioned second mode. In such a case, part of undissolved detergent may start to accumulate in the drainage structure, and by rotating the inner drum at a high speed, water flow between the inner drum and the outer drum flows and drives water in the drainage structure to flow, and then dissolution of the undissolved detergent is accelerated.

In S307, beating washing and high-speed drum rotation washing are repeated.

The laundry treatment device repeats S305 and S306 until washing is finished.

In order to realize the method provided by the embodiments of the application, the embodiments of the application further provide an apparatus for controlling a laundry treatment device, which corresponds to the method for controlling the laundry treatment device. The steps of the embodiments of the method for controlling the laundry treatment device described above are also fully applicable to the embodiments of the apparatus for controlling the laundry treatment device.

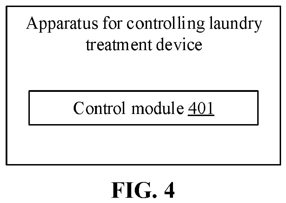

As shown in FIG. 4, the apparatus for controlling the laundry treatment device comprises: a control module 401, configured to control a first water inlet of the laundry treatment device to feed water into a washing drum, where during water feeding through the first water inlet, the laundry treatment device does not dispense a detergent; and to control the laundry treatment device to dispense the detergent into the washing drum when determining that the water feeding through the first water inlet has reached a set condition.

In some embodiments, determining by the control module 401 that the water feeding through the first water inlet has reached the set condition comprises the following operation.

It is determined that a duration of the water feeding through the first water inlet has reached a set duration; or it is determined that an amount of the water feeding through the first water inlet has reached a set water feeding amount; or it is determined that a water level of the washing drum has reached a set water level.

In some embodiments, controlling by the control module 401 the laundry treatment device to dispense the detergent into the washing drum comprises the following operation.

A second water inlet of the laundry treatment device is controlled to feed water into the washing drum, which simultaneously brings the detergent into the washing drum; or a detergent dispensing device of the laundry treatment device is controlled to dispense the detergent into the washing drum.

In some embodiments, the control module 401 is further configured to: control the inner drum of the washing drum to rotate when the second water inlet of the laundry treatment device feeds water into the washing drum which simultaneously brings the detergent into the washing drum, or the detergent dispensing device of the laundry treatment device dispenses the detergent into the washing drum.

In some embodiments, the control module 401 is also configured to: control the laundry treatment device to perform washing when determining that the water level of the washing drum has reached a washing water level.

In some embodiments, controlling by the control module 401 the laundry treatment device to perform washing comprises the following operation.

The laundry treatment device is controlled to work alternately in a first mode and a second mode. The first mode is configured for controlling the rotation speed of the inner drum of the washing drum to be smaller than a critical rotation speed at which the laundry is attached to the inner wall of the inner drum and rotates along with the inner drum, and the second mode is configured for controlling the rotation speed of the inner drum to be larger than or equal to the critical rotation speed.

In some embodiments, controlling by the control module 401 the laundry treatment device to perform washing further comprises the following operation.

A heating device of the laundry treatment device is controlled to heat so that the water temperature in the washing drum is in a preset working temperature range.

In practical application, the control module 401 can be implemented by a processor in the apparatus for controlling the laundry treatment device. Certainly, the processor needs to execute a computer program in a memory to implement its function.

It is to be noted that when the apparatus for controlling the laundry treatment device provided by the embodiment performs control on the laundry treatment device, the division of program modules is merely illustrative. In an actual application, the above processing may be distributed to different program modules as required, i.e., an internal structure of the apparatus is divided into different program modules to complete all or a part of processing described above. In addition, the apparatus for controlling the laundry treatment device provided by the above embodiment has a same concept with the embodiment of the method for controlling the laundry treatment device, and a specific implementation process is detailed in the method embodiment and will no longer repeated herein.

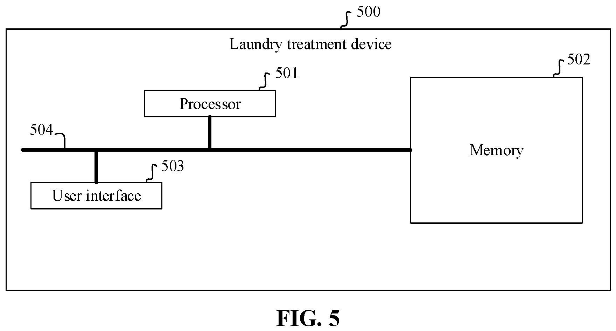

Based on hardware implementation of the program module, and in order to implement the method in the embodiments of the application, the embodiments of the application further provide a laundry treatment device. FIG. 5 only illustrates an exemplary structure, rather than all of the structure, of the laundry treatment device. A part or all of the structure shown in FIG. 5 may be implemented as required.

As shown in FIG. 5, the laundry treatment device 500 provided by the embodiments of the application may comprise: at least one processor 501, a memory 502 and a user interface 503. Components in the laundry treatment device 500 are coupled together via a bus system 504. It may be understood that the bus system 504 is configured to implement connection and communication among these components. In addition to a data bus, the bus system 504 may further comprise a power bus, a control bus and a state signal bus. For ease of clarity, the various buses are labeled as the bus system 504 in FIG. 5.

The user interface 503 may comprise a display, a keypad, a mouse, a trackball, a click wheel, a key, a button, a touch panel or a touch screen, etc.

In the embodiment of the application, the memory 502 is configured to store various types of data to support the operation of the laundry treatment device. Examples of such data comprise any computer program operational on the laundry treatment device.

The method for controlling the laundry treatment device disclosed in the embodiment of the application may be applied to the processor 501, or may be implemented by the processor 501. The processor 501 may be an integrated circuit chip, and has a signal processing capability. During implementation, each step of the control method of the laundry treatment device may be completed by means of an instruction in a form of an integrated logic circuit of hardware in the processor 501 or software. The processor 501 may be a universal processor, a Digital Signal Processor (DSP), or another programmable logic device, separate gate or transistor logic device, separate hardware component and the like. The processor 501 may implement or execute each method, step or logic block diagram disclosed in the embodiments of the application. The universal processor may be a microprocessor, or any conventional processor, etc. The step of the method disclosed in combination with the embodiments of the application may be directly embodied as being executed and completed by a hardware decoding processor, or by a combination of hardware and software modules in the decoding processor. The software module may be located in a storage medium. The storage medium is located in the memory 502. The processor 501 reads information in the memory 502, and completes the steps of the control method of the laundry treatment device provided by the embodiments of the application in combination with hardware.

In an exemplary embodiment, the laundry treatment device may be implemented by one or more of an Application Specific Integrated Circuit (ASIC), a DSP, a Programmable Logic Device (PLD), a Complex Programmable Logic Device (CPLD), a FPGA, a universal processor, a controller, a Micro Controller Unit (MCU), a microprocessor, or other electronic components to execute the above method.

It may be understood that the memory 502 may be a volatile memory or a nonvolatile memory, and may also comprise both the volatile memory and the nonvolatile memory. The nonvolatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disc or a Compact Disc Read-Only Memory (CD-ROM); and the magnetic surface memory may be a magnetic disk memory or magnetic tape memory. The volatile memory may be a Random Access Memory (RAM), and serves as an external high-speed cache. Through illustrative but not restrictive description, many forms of RAMs may be available, for example, a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in the embodiment of the application includes but is not limited to these and any other appropriate types of memories.

In an exemplary embodiment, the embodiments of the application further provide a storage medium, i.e., a computer storage medium, which may be a computer readable storage medium specifically, and comprises, for example, the memory 502 for storing a computer program. The computer program may be executed by the processor 501 of the laundry treatment device to complete the steps of the method in the embodiments of the application. The computer readable storage medium may be memories such as an ROM, a PROM, an EPROM, an EEPROM, a Flash Memory, a magnetic surface memory, an optical disk, or a CD-ROM.

It is to be noted that, terms such as "first" and "second" are only used to distinguish similar objects, rather than to describe a special order or a precedence order.

Additionally, the technical solutions recorded in the embodiments of the application may be freely combined without conflicts.

The above description is only the specific implementation manner of the application and not intended to limit the scope of protection of the application. Any variations or replacements that are easily conceived by the person skilled in the art within the technical scope disclosed by the application shall fall within the scope of protection of the application. Therefore, the scope of protection of the application shall be subjected to the scope of protection of the claims.

## Claims

1. A method for controlling a laundry treatment device, **characterized in that**, the method comprises:
controlling a first water inlet of the laundry treatment device to feed water into a washing drum, wherein during water feeding through the first water inlet, the laundry treatment device does not dispense a detergent; and
controlling the laundry treatment device to dispense the detergent into the washing drum when determining that the water feeding through the first water inlet has reached a set condition.

2. The method of claim 1, wherein determining that the water feeding through the first water inlet has reached the set condition comprises:
determining a duration of the water feeding through the first water inlet has reached a set duration; or
determining that an amount of the water feeding through the first water inlet has reached a set water feeding amount; or
determining that a water level of the washing drum has reached a set water level.

3. The method of claim 1, wherein controlling the laundry treatment device to dispense the detergent into the washing drum comprises:
controlling a second water inlet of the laundry treatment device to feed water into the washing drum, which simultaneously brings the detergent into the washing drum; or
controlling a detergent dispensing device of the laundry treatment device to dispense the detergent into the washing drum.

4. The method of claim 3, wherein when the second water inlet of the laundry treatment device feeds water into the washing drum, which simultaneously brings the detergent into the washing drum, or when the detergent dispensing device of the laundry treatment device dispenses the detergent into the washing drum, the method further comprises:
controlling an inner drum of the washing drum to rotate.

5. The method of claim 1, further comprising:
controlling the laundry treatment device to perform washing when determining that a water level of the washing drum has reached a washing water level.

6. The method of claim 5, wherein controlling the laundry treatment device to perform washing comprises:
controlling the laundry treatment device to work alternately in a first mode and a second mode; wherein the first mode is configured for controlling a rotation speed of an inner drum of the washing drum to be smaller than a critical rotation speed at which laundry is attached to an inner wall of the inner drum and rotates along with the inner drum, and the second mode is configured for controlling the rotation speed of the inner drum to be larger than or equal to the critical rotation speed.

7. The method of claim 6, wherein controlling the laundry treatment device to perform washing further comprises:
controlling a heating device of the laundry treatment device to heat so that a water temperature in the washing drum is in a preset working temperature range.

8. An apparatus for controlling a laundry treatment device, **characterized in that**, the apparatus comprises:
a control module, configured to control a first water inlet of the laundry treatment device to feed water into a washing drum, wherein during water feeding through the first water inlet, the laundry treatment device does not dispense a detergent; and to control the laundry treatment device to dispense the detergent into the washing drum when determining that the water feeding through the first water inlet has reached a set condition.

9. A laundry treatment device, **characterized in that**, the laundry treatment device comprises: a processor, and a memory configured to store a computer program executable by the processor, wherein
the processor, when being configured to execute the computer program, implements steps of the method of any one of claims 1 to 7.

10. A storage medium, storing a computer program thereon, **characterized in that**, the computer program, when being executed by a processor, implements steps of the method of any one of claims 1 to 7.
